# EUROPÄISCHE PATENTSCHRIFT

(11) **EP 3 498 418 B1**
(45) Veröffentlichungstag und Bekanntmachung des Hinweises auf die Patenterteilung: **09.09.2020**
(21) Anmeldenummer: 18211312.6
(22) Anmeldetag: 10.12.2018
(51) Int. Cl.: B23K 26/38, B23K 26/70, B23K 31/10

(54) **VERFAHREN ZUR BEARBEITUNG VON BAHN- ODER PLATTENFÖRMIGEM MATERIAL IN EINER BEARBEITUNGSMASCHINE, UND BEARBEITUNGSMASCHINE**
METHOD FOR PROCESSING SHEET -SHAPED OR PLATE -SHAPED MATERIAL IN A PROCESSING MACHINE AND PROCESSING MACHINE
PROCÉDÉ D'USINAGE DU MATÉRIAU EN FORME DE BANDE OU DE PLAQUE DANS UNE MACHINE D'USINAGE ET MACHINE D'USINAGE

(30) Priorität: 13.12.2017 DE 102017129730
(43) Veröffentlichungstag der Anmeldung: 19.06.2019
(73) Patentinhaber: eurolaser GmbH, 21339 Lüneburg (DE)
(72) Erfinder: Kluczinski, Matthias, 21339 Lüneburg (DE)
(74) Vertreter: Noack, Andreas

(56) Entgegenhaltungen:
- EP-A1- 2 845 945
- EP-A2- 0 476 398
- US-A1- 2007 282 718

## Beschreibung

Die Erfindung betrifft ein Verfahren zur Bearbeitung von bahn- oder plattenförmigem Material in einer Bearbeitungsmaschine.

Die Bearbeitung von bahn- oder plattenförmigen Materialien kann auf unterschiedliche Arten erfolgen. Eine einfache Möglichkeit besteht darin, das Material in dem Bearbeitungsbereich der Bearbeitungsmaschine mit einem fest vorgegebenen Werkzeug entlang einer fest vorgegebenen Bearbeitungskontur zu bearbeiten, beispielsweise bei der schneidenden Verarbeitung von Papierbahnen zu Formatschnitten, wie es als Druckerpapier oder zur Herstellung von Heften oder Schreibblöcken verwendet wird. Diese Art der Bearbeitung ist allerdings sehr unflexibel.

Bei einer anderen Art der Verarbeitung wird das Material in dem Bearbeitungsbereich der Bearbeitungsmaschine platziert. Dann wird eine Bearbeitungskontur festgelegt, entlang welcher das Material bearbeitet werden soll. Diese Bearbeitungskontur wird dann von einem Bearbeitungswerkzeug abgefahren, wobei die gewünschte Bearbeitung erfolgt. Anschließend wird das Material aus dem Bearbeitungsbereich entnommen.

Dieser Art der Bearbeitung ist wesentlich flexibler als die zuvor beschriebene. Die gewünschte Bearbeitungskontur kann jederzeit leicht geändert werden, um beispielsweise unterschiedlich geformte Konturen aus einer Materialbahn auszuschneiden, oder um unterschiedliche Gravuren vorzunehmen.

Bei der Festlegung der Bearbeitungskontur können unterschiedlichste Randbedingungen berücksichtigt werden. Beispielsweise kann die Kontur so ausgerichtet werden, dass aus einer Materialbahn möglichst viele gleiche oder unterschiedliche Zuschnitte hergestellt werden können. Ebenso können Schneidkonturen so auf einer Materialbahn ausgerichtet werden, dass eine Musterung der Materialbahn bei der späteren Verbindung einzelner Zuschnitte zueinander passt. Bei der Ausrichtung von Bearbeitungskonturen können weiterhin Fehlstellen oder natürliche Strukturen einer Materialbahn berücksichtigt werden.

Die Erfindung betrifft weiterhin eine Maschine zum Bearbeiten von bahn- oder plattenförmigem Material, mit einem Bearbeitungsbereich, in welchem das zu bearbeitende Material platziert werden kann, einer Steuerung zum Festlegen einer Bearbeitungskontur, und einem im Bearbeitungsbereich verfahrbaren Bearbeitungswerkzeug.

Wenn das bearbeitete Material in hochpreisigen und/oder sicherheitsrelevanten Produkten verarbeitet werden soll, sind Qualitätskontrolle, Dokumentation und Rückverfolgbarkeit der Bearbeitungsergebnisse von hoher Bedeutung. Dazu haben sich in vielen Bereichen beschreibbare elektronische Datenträger durchgesetzt, welche während der Produktion mit den Produktionsprozess charakterisierenden Daten beschrieben werden. Als Datenträger werden dabei hauptsächlich berührungslos beschreibbare Datenträger wie RFID-Chips verwendet.
Aus der US20070282718A1 ist ein Verfahren bekannt, bei welchem ein plattenförmiges Material in eine Station eingelegt wird, in welcher eine Bearbeitungskontur auf die Platte projiziert wird. Dann wird ein Datenträger innerhalb der Kontur aufgebracht, auch welchem Bearbeitungsanweisungen für eine Bearbeitungsmaschine gespeichert sind, in welche das plattenförmige Material anschließend verbracht wird.
Aus der EP0476398A2 sind ein Verfahren und eine Maschine zum Schneiden und Etikettieren von Textilien bekannt, bei welcher in einem ersten Maschinenabschnitt Etiketten auf die Materialbahn aufgebracht werden, aus welche in einem zweiten Maschinenabschnitt zuschnitte ausgeschnitten werden. Die Etiketten sind mit Informationen darüber versehen, an welcher Stelle der Materialbahn sie aufgebracht werden sollen.
Aus der EP2845945A1 sind ein Verfahren und eine Maschine zum Schneiden von Textilmaterial mittels Laserstrahlung bekannt.

Bei der oben beschriebenen Bearbeitung von Materialbahnen ist es jedoch schwierig, elektronische Datenträger so auf das Material aufzubringen, dass sie sicher in dem fertigen Produkt landen, und nicht etwa in einem Verschnittbereich.
Zudem ist es insbesondere bei komplexen Produkten wichtig, dass sich der Datenträger immer an der gleichen Stelle des Produkts befindet, so dass er später auch automatisch ausgelesen werden kann. Dies ist schwierig, da die spätere Lage der Bearbeitungskontur beim Einbringen des Materials in die Bearbeitungsmaschine noch nicht feststeht.

Bei dem Beschreiben des elektronischen Datenträgers nach dem Bearbeiten des Materials kann zusätzlich das Problem auftreten, dass das Material nach der Bearbeitung ungeordnet aus der Bearbeitungsmaschine entnommen wird, und die genaue Position des Datenträgers daher nicht mehr bekannt ist. Insbesondere wenn aus einer Platte oder Bahn des Materials bei der Bearbeitung mehrere Teile ausgeschnitten werden, so ist die genaue Zuordnung der Daten zu einem einzelnen Teil nicht mehr ohne weiteres klar, und es kann zu Fehlern kommen.

Es besteht daher eine Aufgabe der Erfindung darin, ein Verfahren sowie eine Maschine bereitzustellen, welche hinsichtlich der beschriebenen Problematik verbessert ist.

Diese Aufgabe wird gemäß eines Aspekts der Erfindung gelöst durch ein Verfahren zur Bearbeitung von bahn- oder plattenförmigem Material in einer Bearbeitungsmaschine, mit den Schritten 1a) Platzieren des Materials in einem Bearbeitungsbereich der Bearbeitungsmaschine, 1b) Festlegen einer Bearbeitungskontur, entlang welcher das Material zu bearbeiten ist, 1c) Führen eines Bearbeitungswerkzeugs entlang der Bearbeitungskontur, um das Material zu bearbeiten, und 1d) Entnehmen des bearbeiteten Materials aus dem Bearbeitungsbereich der Bearbeitungsmaschine, welches dadurch weitergebildet ist, dass nach Schritt 1b) und vor Schritt 1d) ein beschreibbarer elektronischer Datenträger an einer relativ zu der Bearbeitungskontur vorgegebenen oder vorgebbaren Position innerhalb der Bearbeitungskontur auf das Material aufgebracht wird, und dass der beschreibbare Datenträger vor Schritt 1d) mit den durchgeführten Bearbeitungsprozess charakterisierenden Daten beschrieben wird.

Die Erfindung hat erkannt, dass zum einen der Ort, an welchem der Datenträger aufzubringen ist, nach dem Festlegen der Bearbeitungskontur eindeutig bestimmt werden kann. Der Datenträger wird dabei immer sicher innerhalb der Bearbeitungskontur aufgebracht, wobei beispielsweise ein Sicherheitsabstand von der Grenze der Bearbeitungskontur eingehalten werden kann. Gleichzeitig kann der Ort, an welchem der Datenträger aufgebracht wird, so festgelegt werden, dass sich der Datenträger in einem fertiggestellten Produkt immer an der gleichen Stelle befindet. Ein automatisches Auslesen des Datenträgers in einem späteren Verarbeitungsschritt oder am fertigen Produkt ist somit deutlich vereinfacht.

Die Erfindung hat zudem erkannt, dass das Beschreiben des Datenträgers vorteilhafterweise zu einem Zeitpunkt erfolgt, zu dem der Ort des Datenträgers genau bekannt ist. Dies ist so lange der Fall, wie sich das Material im Bearbeitungsbereich der Bearbeitungsmaschine befindet; erst bei der Entnahme des Materials aus dem Bearbeitungsbereich kann die Ortsinformation verloren gehen. Durch das erfindungsgemäße Verfahren wird also sichergestellt, dass die Daten erfolgreich auf den richtigen Datenträger geschrieben werden.

Die Aufgabe wird gemäß eines weiteren Aspekts der Erfindung gelöst durch ein Verfahren zur Bearbeitung von bahn- oder plattenförmigem Material in einer Bearbeitungsmaschine, mit den Schritten 2a) Platzieren des Materials in einem Bearbeitungsbereich der Bearbeitungsmaschine, 2b) Festlegen einer Bearbeitungskontur, entlang welcher das Material zu bearbeiten ist, 2c) Führen eines Bearbeitungswerkzeugs entlang der Bearbeitungskontur, um das Material zu bearbeiten, und 2d) Entnehmen des bearbeiteten Materials aus dem Bearbeitungsbereich der Bearbeitungsmaschine, welches dadurch weitergebildet ist, dass nach Schritt 2b) und vor Schritt 2d) ein mit einem Identifizierungscode beschriebener elektronischer Datenträger an einer relativ zu der Bearbeitungskontur vorgegebenen oder vorgebbaren Position innerhalb der Bearbeitungskontur auf das Material aufgebracht wird, der Identifizierungscode von dem Datenträger vor Schritt d) ausgelesen wird, der ausgelesene Identifizierungscode mit den durchgeführten Bearbeitungsprozess charakterisierenden Daten verknüpft wird, und dass die verknüpften Daten so in einer Datenbank hinterlegt werden, dass sie allein mit dem Identifizierungscode auffindbar sind.

Diese Variante der Erfindung macht sich die Erkenntnis zu Nutze, dass bei der Verwendung von Datenträgern, die mit einem nicht veränderbaren Identifizierungscode beschrieben sind, durch das Auslesen des Identifizierungscodes nach dem Aufbringen des Datenträgers auf das Material eine sichere Zuordnung des Identifizierungscodes und den mit diesem Identifizierungscode verknüpften Daten zu dem jeweiligen Abschnitt des Materials gewährleisten lässt.

In einer möglichen Ausführung eines Verfahrens nach der Erfindung umfasst das Bearbeiten wenigstens einen Bearbeitungsschritt, in welchem das Material geschnitten wird. Gerade bei einer schneidenden Bearbeitung ist die genaue Positionierung des Datenträgers wichtig, da der Datenträger andernfalls in einem Verschnittbereich des Materials oder gar auf der Schnittlinie platziert sein kann. Im ersteren Fall würde der Datenträger nicht in das fertige Produkt gelangen, um letzteren Fall würde der Datenträger sogar bei der Bearbeitung zerstört.

Dabei kann das Material mittels eines Laserstrahls geschnitten werden, wobei das Bearbeitungswerkzeug eine Fokussierlinse für den Laserstrahl umfasst. Die den Bearbeitungsprozess charakterisierenden Daten können in diesem Fall Betriebsdaten einer Laserquelle umfassen.

Für einen Laser-Schneidprozess ist es wichtig, dass die Laserquelle mit den korrekten Einstellungen für Strahlleistung, Tastverhältnis, Strahlmode u.Ä. betrieben wird. Andernfalls kann das Schneidergebnis mangelhaft sein. Beispielsweise können in einem Textilmaterial bei zu geringer Strahlleitung Gewebefäden nicht vollständig durchtrennt sein, so dass bei der Entnahme des geschnittenen Materials Schäden durch Ziehfäden entstehen.

Durch das Abspeichern der Betriebsdaten der Laserquelle auf dem Datenträger kann für das jeweilige Werkstück nachverfolgbar dokumentiert werden, dass diese während des Schnittvorgangs korrekt gearbeitet hat, und somit keine Bearbeitungsbedingten Fehler in dem Material vorhanden sein können.

Die den Bearbeitungsprozess charakterisierenden Daten können in einer weiteren Ausführung des erfindungsgemäßen Verfahrens Identifikationsdaten für ein Werk, eine Maschine, und/oder einen Maschinenbediener umfassen. So kann für ein bestimmtes Materialstück durchgängig nachverfolgt werden, in welcher Fabrik und auf welcher Maschine die Bearbeitung erfolgt ist. Ebenso kann der jeweilige Bediener der Maschine dokumentiert werden. Natürlich können auch zusätzliche Informationen wie eine Batch-Nummer und/oder Datum und Uhrzeit der Produktion auf dem Datenträger abgespeichert werden.

In einer besonderen Ausführung eines Verfahrens nach der Erfindung können die den Bearbeitungsprozess charakterisierenden Daten einen Speicherort identifizieren, an welchem weitere den Bearbeitungsprozess charakterisierende Daten abgelegt sind.

In komplexe Bearbeitungsprozesse kann eine große Menge an Prozessdaten anfallen. Beispielsweise kann ein Schneid- oder Gravurprozess mittels einer Videokamera überwacht werden, und das entsprechende Video wird zur Dokumentation der fehlerfreien Bearbeitung verwendet. Insbesondere bei Hochgeschwindigkeitsvideos sind die resultierenden Datenmengen so groß, dass eine Speicherung auf dem beschreibbaren Datenträger nicht sinnvoll machbar ist. In diesem Fall können die Überwachungsdaten in einer Datenbank hinterlegt werden, und auf dem Datenträger wird lediglich eine Information hinterlegt, welche den entsprechenden Datensatz in der Datenbank identifiziert.

In einer besonderen Ausführung des erfindungsgemäßen Verfahrens kann der Datenträger ein berührungslos beschreibbarer und/oder auslesbarer Datenträger sein. Hierzu kommen beispielsweise Datenträger in Betracht, die durch Nahfeld-Funkübertragung, optische Übertragung und/oder magnetische Übertragung beschreibbar und/oder auslesbar sind, beispielsweise RFID-chips.

Die Aufgabe wird gemäß eines weiteren Aspekts der Erfindung gelöst durch eine Maschine zum Bearbeiten von bahn- oder plattenförmigem Material, mit einem Bearbeitungsbereich, in welchem das zu bearbeitende Material platziert werden kann, einer Steuerung zum Festlegen einer Bearbeitungskontur, und einem im Bearbeitungsbereich verfahrbaren Bearbeitungswerkzeug, welche dadurch weitergebildet ist, dass die Maschine weiterhin eine im Bearbeitungsbereich verfahrbare erste Einheit zum Aufbringen von elektronischen Datenträgern auf das Material, sowie eine zweite Einheit zum Beschreiben und/oder Auslesen von auf das Material aufgebrachten elektronischen Datenträgern umfasst.

Durch die im Bearbeitungsbereich verfahrbare erste Einheit zum Aufbringen von Datenträgern kann die Maschine den Datenträger an praktisch jeder Stelle des Materials aufbringen. Dazu wird in der Steuerung nach dem Festlegen der Bearbeitungskontur die gewünschte Position des Datenträgers ermittelt, und die erste Einheit wird an die entsprechende Position verfahren. Dann wird die erste Einheit durch die Steuerung aktiviert, um einen Datenträger an der entsprechenden Stelle auf das Material aufzubringen.

Dann werden entweder von der Steuerung die zu schreibenden Daten an die zweite Einheit übermittelt und von dieser auf den Datenträger geschrieben, oder es wird der Identifizierungscode von dem Datenträger gelesen und in der Steuerung mit den Daten verknüpft, die in der Datenbank abgelegt werden sollen.

In einer bevorzugen Ausführungsform der Erfindung kann die zweite Einheit ebenfalls im Bearbeitungsbereich verfahrbar ausgeführt sein. Die zweite Einheit kann dann zum Lesen bzw. Schreiben der Daten an die bekannte Position des Datenträgers verfahren werden.

Dies ist insbesondere dann sinnvoll, wenn die zum Lesen bzw. Schreiben der Daten verwendete Technologie nur eine kurze Reichweite hat, und/oder mehrere Datenträger im Bearbeitungsbereich angeordnet sind.

In einer möglichen Ausführung einer Maschine nach der Erfindung können das Bearbeitungswerkzeug, die erste Einheit, und/oder die zweite Einheit auf einem in eine erste Richtung verfahrbaren Schlitten so angeordnet sein, dass sie entlang des Schlittens in einer zweiten Richtung verfahrbar sind. Die erste und die zweite Richtung sind dabei bevorzugt senkrecht zueinander und spannen eine Ebene auf, welche im Wesentlichen parallel zum der Oberfläche des zu bearbeitenden Materials verläuft. Das Bearbeitungswerkzeug und/oder die entsprechenden Einheiten können über die Bewegung des Schlittens und die Bewegung entlang des Schlittens zu jeder Position innerhalb des Bearbeitungsbereichs der Bearbeitungsmaschine verfahren werden.

Prinzipiell können sowohl das Bearbeitungswerkzeug als auch die erste Einheit und die zweite Einheit jeweils auf einem separaten Schlitten angeordnet sein, so dass sie nahezu vollständig unabhängig voneinander verfahrbar sind.

Gemäß einer vorteilhaften Ausführung einer Maschine nach der Erfindung sind jedoch sowohl das Bearbeitungswerkzeug als auch die erste Einheit und die zweite Einheit auf einem gemeinsamen Schlitten angeordnet. Hierdurch wird der Aufbau der Maschine und deren Steuerung deutlich vereinfacht. Gleichzeitig ergeben sich keine nennenswerten Einbußen bei der Bearbeitungsgeschwindigkeit, da sowohl das Aufbringen des Datenträgers als auch das Beschreiben des Datenträgers in der Regel deutlich weniger Zeit benötigt, als das Bearbeiten des Materials unter Abfahren der Bearbeitungskontur.

Vorzugsweise ist dabei das Bearbeitungswerkzeug unabhängig von der ersten Einheit und der zweiten Einheit entlang des Schlittens verfahrbar. Somit müssen bei einer Bewegung des Bearbeitungswerkzeugs entlang des Schlittens die erste Einheit und die zweite Einheit nicht mit bewegt werden, was die Masseträgheit reduziert und somit eine schnellere Bewegung des Bearbeitungswerkzeugs ermöglicht.

In einer weiteren Ausgestaltung einer Maschine nach der Erfindung sind die erste Einheit und die zweite Einheit bezüglich der Bewegung entlang des Schlittens miteinander gekoppelt. Diese Einheiten müssen während der Bearbeitung nicht schnell bewegt werden, daher spielt die zu bewegende Masse hier eine untergeordnete Rolle.

In einer möglichen Ausführung einer Maschine nach der Erfindung umfasst das Bearbeitungswerkzeug eine Fokussiereinheit für einen Laserstrahl.

Die Erfindung wird nachfolgend anhand einiger Ausführungsbeispiele und Zeichnungen näher erläutert. Es zeigen:
Fig. 1: Eine Bearbeitungsmaschine in einer prinzipiellen Darstellung,
Fig. 2a-f: den Schrittweisen Ablauf eines Bearbeitungsverfahrens,
Fig. 3: Einen Verfahrensschritt eines weiteren Bearbeitungsverfahrens.

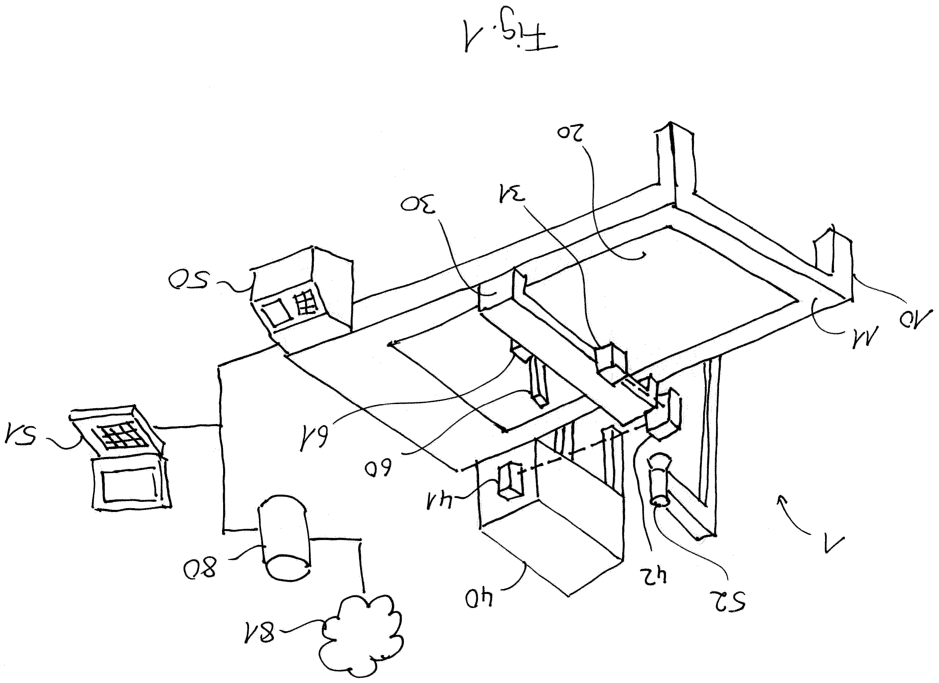

Figur 1 zeigt eine Bearbeitungsmaschine 1. Die Bearbeitungsmaschine 1 umfasst einen Maschinentisch 10, dessen Oberfläche einen Bearbeitungsbereich 11 bildet. Auf dem Maschinentisch 10 ist eine Materialbahn 20 abgelegt, die in der Bearbeitungsmaschine 1 bearbeitet werden soll.

Ein Schlitten 30 ist entlang des Maschinentisches 10 verfahrbar angeordnet. Zum Verfahren des Schlittens 30 weist dieser einen nicht dargestellten Antriebsmotor auf.

An dem Schlitten 30 ist ein Bearbeitungswerkzeug 31 verfahrbar angeordnet. Zum Verfahren des Bearbeitungswerkzeugs 31 entlang des Schlittens 30 weist der Schlitten eine nicht dargestellte Antriebsvorrichtung auf, welche beispielsweise einen Riementrieb oder einen Spindeltrieb umfassen kann.

Das Bearbeitungswerkzeug 31 ist im dargestellten Beispiel eine Fokussiereinheit für einen Laserstrahl. Der Laserstrahl wird in einer Strahlquelle 40 erzeugt und über Umlenkeinheiten 41,42 zu dem Bearbeitungswerkzeug geleitet. Dabei ist die Umlenkeinheit 41 fest an der Strahlquelle 40 montiert und lenkt den Laserstrahl in eine erste Richtung um, welche parallel zur Bewegungsrichtung des Schlittens 30 verläuft. Die zweite Umlenkeinrichtung 42 ist an dem Schlitten 30 montiert und lenkt den Laserstrahl in Richtung der Fokussiereinheit um. In der Fokussiereinheit wird der Laserstrahl in Richtung des Maschinentisches 10 umgelenkt und fokussiert.

Der Strahlweg des Laserstrahls ist zum besseren Verständnis offen dargestellt, wird bei einer realen Maschine aber aus Sicherheitsgründen vollständig ummantelt sein.

Das Bearbeitungswerkzeug 31 ist wechselbar ausgeführt, so dass für unterschiedliche Materialien 20 unterschiedliche Fokussiereinheiten oder auch mechanische Werkzeuge montiert werden können.

Die Bearbeitungsmaschine 1 weist weiterhin eine Steuerung 50 auf. Die Steuerung 50 umfasst Eingabemittel, wie Start-, Stopp- und Not-Halt-Schalter, und Ausgabemittel, wie eine Statusanzeige und/oder einen Monitor. Eingabemittel (mit Ausnahme des Not-Halt-Schalters) und Ausgabemittel können ganz oder teilweise in einem berührungsempfindlichen Display (Touchscreen) zusammengefasst sein. Die Steuerung 50 kann mit einem externen Computer 51 verbunden werden, um Parameter eines Bearbeitungsauftrags von dem Computer 51 auf die Steuerung 50 zu übertragen.

Eine Kamera 52 ist so an dem Maschinentisch 10 montiert, dass der Bearbeitungsbereich 11 komplett mittels der Kamera 52 abgebildet werden kann. Die Kamera 52 ist mit der Steuerung 50 verbunden.

An dem Schlitten 30 ist weiterhin eine erste Einheit 60 zum Aufbringen von Datenträgern auf die Materialbahn 20 angeordnet. Die erste Einheit 60 ist ähnlich wie das Bearbeitungswerkzeug 31, aber unabhängig von diesem, entlang des Schlittens 30 verfahrbar. Dazu kommt ebenfalls eine Antriebsvorrichtung zum Einsatz.

Damit das sowohl das Bearbeitungswerkzeug 31 als auch die erste Einheit 60 kollisionsfrei über die gesamte Breite des Schlittens 30 verfahren werden können, können das Bearbeitungswerkzeug 31 und die erste Einheit 60 an gegenüberliegenden Seiten des Schlittens 30 angeordnet sein. Eine Anordnung auf der selben Seite ist aber ebenfalls denkbar.

Die erste Einheit 60 kann eine an sich bekannte Etikettiereinheit sein. Solche Etikettiereinheiten entnehmen Etiketten aus einem Vorrat, der beispielsweise in Form eines Stapels oder einer Rolle vorgehalten wird, und bringen die Etiketten auf die Materialbahn 20 auf. Die Etiketten können als beschreibbare Datenträger ausgeführt sein. Dazu weist jedes Etikett eine spiralförmige Antenne sowie eine mikroelektronische Schaltung auf, welche einen nicht-flüchtigen Datenspeicher umfasst. Solche Etiketten sind an sich hinlänglich bekannt und werden daher hier nicht näher erläutert.

Alternativ können auch andere Einheiten zum Aufbringen von Datenträgern auf die Material 20 zum Einsatz kommen. So sind beispielsweise schon RFID-Chips mit einer Größe von wenigen µm bekannt, welche über einen ROM-Speicher mit herstellerseitig einprogrammiertem Identifikationscode verfügen. Solche RFID-Chips können beispielsweise in einem einzigen Klebstofftropfen auf die Materialbahn 20 aufgetragen werden und sind im fertigen Produkt nahezu unsichtbar.

Zusätzlich zu der ersten Einheit 60 ist eine zweite Einheit 61 an dem Schlitten 30 angeordnet. Die zweite Einheit 61 ist ebenfalls entlang des Schlittens 30 verfahrbar, und zwar entweder gemeinsam mit der ersten Einheit 60 oder unabhängig von dieser. Im letzteren Fall wäre der zweiten Einheit 61 wiederum eine separate Antriebsvorrichtung zugeordnet.

Die zweite Einheit 61 ist zum Auslesen und/oder Beschreiben der Datenträger eingerichtet, welche von der ersten Einheit 60 aufgebracht werden. Abhängig von der Art der verwendeten Datenträger wird dazu die zweite Einheit 61 direkt über dem Datenträger positioniert und kommuniziert mit diesem über ein Funksignal. Alternativ können auch andere Arten der Datenkommunikation verwendet werden, wie beispielsweise Infrarotübertragung oder Magnetfeldübertragung. Der Aufbau entsprechender Lese- und/oder Schreibeinheiten ist hinlänglich bekannt und wird daher nicht weiter beschrieben.

In einer nicht dargestellten Variante der Bearbeitungsmaschine 1 kann die zweite Einheit ortsfest angeordnet sein, beispielsweise im Bereich der Kamera 52.

Die Steuerung 50 steht in Verbindung mit einer Datenbank 80, welche auch über ein Netzwerk 81 ausgelesen werden kann. Das Netzwerk 81 kann beispielsweise das Internet sein.

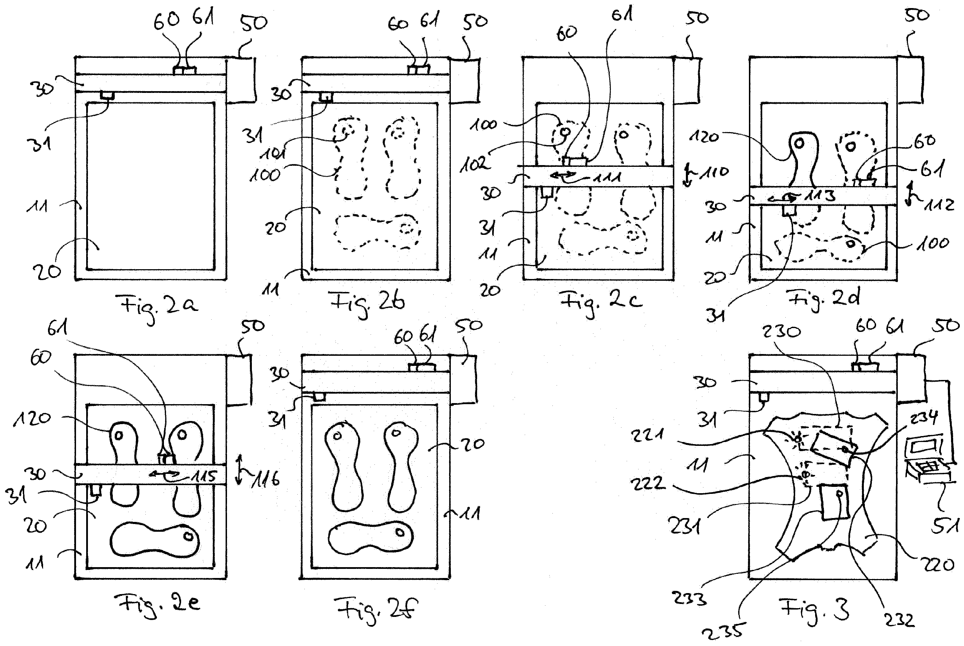

Die Funktion der in Figur 1 dargestellten Bearbeitungsmaschine 1 ist in den Figuren 2a bis 2f dargestellt.

Zunächst wird der Bearbeitungsbereich 11 der Bearbeitungsmaschine 1 mit der Materialbahn 20 oder einer Materialplatte bestückt. Dazu fährt die Steuerung 50 den Schlitten 30 ganz aus dem Bearbeitungsbereich heraus, was in der Figur 2a zu erkennen ist. In dieser Position kann das Material 20 auf die Oberfläche des Maschinentisches aufgelegt werden.

In nicht dargestellten alternativen Ausführungen einer Bearbeitungsmaschine kann der Maschinentisch anstelle einer festen Tischoberfläche einen Gurtförderer umfassen, welcher ein als Rolle bereitgestelltes Material abrollt und in den Bearbeitungsbereich fördert. Als weitere Alternative kann der Maschinentisch bewegliche Tischelemente aufweisen, welche zwischen einer Beladeposition und einer Bearbeitungsposition verfahren werden können.

Anschließend werden von der Steuerung 50 Bearbeitungskonturen 100 auf dem Material 20 festgelegt. Diese sind in Figur 2b durch gestrichelte Linien dargestellt. Zusätzlich werden die Positionen 101 festgelegt, an denen später die Datenträger aufgebracht werden sollen.

Die Festlegung der Bearbeitungskonturen 100 auf dem Material 20 kann unter unterschiedlichen Gesichtspunkten erfolgen. Die Bearbeitungskonturen 100 können vorab auf dem Computer 51 definiert worden sein, und lediglich an die Steuerung 50 übertragen werden. Dabei kann mittels der Kamera 52 eine Lagekorrektur durchgeführt werden, wenn das Material 20 nicht ganz genau in einer Sollposition aufgelegt worden ist.

Bei der Festlegung der Bearbeitungskonturen 100 kann auch eine Musterung des Material berücksichtigt werden, welche ebenfalls mittels der Kamera 52 erkannt wird.

Nach der Festlegung der Bearbeitungskonturen werden in einem nächsten Bearbeitungsschritt durch die erste Einheit 60 Datenträger 102 an den Positionen 101 auf die Materialbahn 20 aufgetragen. Dazu werden die entsprechenden Positionen 101 angefahren, indem der Schlitten 30 und die erste Einheit entsprechend bewegt werden, was durch die Pfeile 110,111 in der Figur 2c angedeutet ist.

Nach dem Aufbringen der Datenträger 102 wird die eigentliche Bearbeitung des Materials 20 durchgeführt. Dazu werden der Schlitten 30 und das Bearbeitungswerkzeug 31 so verfahren, dass die das Bearbeitungswerkzeug 30 entlang der Bearbeitungskonturen 100 bewegt. Im dargestellten Beispiel schneidet das Bearbeitungswerkzeug das Material 20 entlang der Bearbeitungskonturen 100, wobei Schnittlinien 120 entstehen. Die Bewegung des Schlittens 30 und des Bearbeitungswerkzeugs 31 ist durch die Pfeile 112,113 angedeutet.

Während der Bearbeitung des Materials 20 zeichnet die Steuerung 50 Daten auf, welche den Bearbeitungsprozess charakterisieren. Dazu gehören beispielsweise Datum und Uhrzeit der Bearbeitung, Identifikationsdaten der Bearbeitungsmaschine 1 sowie der Fabrik, in welcher die Bearbeitungsmaschine 1 installiert ist, Identifikationsdaten eines Bedieners, der Bearbeitungsmaschine 1, und Betriebsdaten der Strahlquelle 40, falls die Bearbeitung durch einen Laserstrahl erfolgt. Weiterhin können die Videodaten der Kamera 52 zu den charakterisierenden Daten gezählt werden, ebenso aktuelle Daten einer nicht dargestellten Klimaüberwachung.

Wenn die Speicherkapazität der Datenträger 102 zum Speichern der charakterisierenden Daten ausreicht, so werden in einem nächsten Schritt die Daten mittels der zweiten Einheit 61 auf die Datenträger geschrieben. Reicht die Speicherkapazität der Datenträger 102 hingegen nicht aus, so werden die Daten stattdessen in der Datenbank 80 abgelegt, und die Adresse der Daten in der Datenbank 80 wird auf die Datenträger 102 geschrieben.

Natürlich kann auch ein Teil der Daten direkt auf die Datenträgern 102 geschrieben werden, und ein anderer Teil der Daten wird in der Datenbank 80 abgelegt.

Falls die Datenträger 102 nicht beschreibbar sind, so wird der Identifizierungscode der Datenträger von der zweiten Einheit 61 ausgelesen und in der Steuerung mit den Daten verknüpft. Die verknüpften Daten werden dann in der Datenbank 81 abgelegt. Beispielsweise kann dabei der Identifizierungscode in einem separaten Feld eines Datensatzes der Datenbank hinterlegt werden, so dass er später leicht aufgefunden werden kann. Die eigentlichen Daten sind dann in einem oder mehreren weiteren Feldern des Datensatzes hinterlegt.

Zum Beschreiben oder Auslesen der Datenträger wird die zweite Einheit 61 durch Verfahren des Schlittens 30 und der zweiten Einheit 61 entlang des Schlittens 30 über den jeweiligen Datenträgern 102 positioniert, so dass eine Datenübertragung zwischen dem Datenträger 102 und der zweiten Einheit 61 möglich ist. Die entsprechenden Bewegungen des Schlittens 30 und der zweiten Einheit 61 sind durch entsprechende Pfeile 115,116 angedeutet.

Als letztes wird dann der Schlitten 30 wieder ganz aus dem Bearbeitungsbereich 11 gefahren, so dass das bearbeitete Material 20 aus der Bearbeitungsmaschine entnommen werden kann. Dies ist in Figur 2f dargestellt. Dabei können alternativ auch ein Gurtförderer oder bewegliche Tischelemente zum Einsatz kommen.

Die auf dem Datenträger 102 und/oder in der Datenbank hinterlegten charakterisierenden Daten können in der nachfolgenden Bearbeitung des Materials ausgelesen und zur weiteren Prozessteuerung verwendet werden. So kann beispielsweise ein Materialzuschnitt in einem späteren Prozessschritt ausgesondert werden, wenn die charakterisierenden Daten auf einen Mangel bei der Bearbeitung hindeuten. Je nach Art und Schwere des Mangels kann der Zuschnitt komplett ausgesondert werden, oder zur Herstellung eines Artikels 2. Wahl verwendet werden.
Gleichfalls ist es denkbar, dass in nachfolgenden Prozessschritten ebenfalls charakterisierende Daten aufgezeichnet werden und dann zusätzlich auf dem Datenträger und/oder in der Datenbank hinterlegt werden. Auf diese Weise lässt sich der komplette Fertigungsprozess protokollieren.

In Figur 3 ist eine alternative Methode zur Festlegung von Bearbeitungskonturen dargestellt. Anstelle einer maschinell hergestellten Materialbahn soll hierein natürliches Material 220 bearbeitet werden, beispielsweise ein Stück Naturleder, aus dem Zuschnitte für eine Handtasche geschnitten werden sollen. Dabei weist das Material 220 Fehlstellen 221,222 auf, welche durch eine automatische Bildverarbeitung kaum erkannt werden, für die Verwendung in dem Endprodukt nicht geeignet sind.

Der Computer überträgt hier zwei voreingestellte Bearbeitungskonturen 230,231 an die Steuerung 50, diese werden durch ein geeignetes Projektionssystem (nicht dargestellt) sichtbar auf das Material projiziert. Ein Bediener prüft nun, ob das Material innerhalb der Bearbeitungskonturen 230,231 für die Verwendung geeignet ist, was jedoch wegen der Fehlstellen 221,222 nicht zutrifft. Über Eingaben am Computer 51 oder an der Steuerung 50 kann der Bediener jetzt die Lage der Bearbeitungskonturen 230,231 so verschieben, dass diese nur einwandfreies Material beinhalten. Dann wird der Bearbeitungsprozess manuell gestartet, so dass durch einbringen von Schnittlinien 232,233 einwandfreie Materialstücke ausgeschnitten werden. Der Auswahlvorgang der geeigneten Bearbeitungskonturen 230,231 kann zusammen mit anderen prozessrelevanten Daten auf den Datenträgern 234,235 und/oder in der Datenbank 80 dokumentiert werden.

## Patentansprüche

1. Verfahren zur Bearbeitung von bahn- oder plattenförmigem Material (20) in einer Bearbeitungsmaschine (1), mit den Schritten:
1a) Platzieren des Materials (20) in einem Bearbeitungsbereich (11) der Bearbeitungsmaschine (1),
1b) Festlegen einer Bearbeitungskontur (100), entlang welcher das Material (20) zu bearbeiten ist,
1c) Führen eines Bearbeitungswerkzeugs (31) entlang der Bearbeitungskontur (100), um das Material (20) zu bearbeiten, und
1d) Entnehmen des bearbeiteten Materials (20) aus dem Bearbeitungsbereich (11) der Bearbeitungsmaschine (1),
**dadurch gekennzeichnet, dass**
- nach Schritt 1b) und vor Schritt 1d) ein beschreibbarer elektronischer Datenträger (102) an einer relativ zu der Bearbeitungskontur (100) vorgegebenen oder vorgebbaren Position innerhalb der Bearbeitungskontur (100) auf das Material (20) aufgebracht wird, und dass
- der beschreibbare Datenträger (102) vor Schritt d) mit den durchgeführten Bearbeitungsprozess charakterisierenden Daten beschrieben wird.

2. Verfahren zur Bearbeitung von bahn- oder plattenförmigem Material (20) in einer Bearbeitungsmaschine (1), mit den Schritten:
2a) Platzieren des Materials (20) in einem Bearbeitungsbereich (11) der Bearbeitungsmaschine (1),
2b) Festlegen einer Bearbeitungskontur (100), entlang welcher das Material (20) zu bearbeiten ist,
2c) Führen eines Bearbeitungswerkzeugs (31) entlang der Bearbeitungskontur (100), um das Material (20) zu bearbeiten, und
2d) Entnehmen des bearbeiteten Materials (20) aus dem Bearbeitungsbereich (11) der Bearbeitungsmaschine (1),
**dadurch gekennzeichnet, dass**
- nach Schritt 2b) und vor Schritt 2d) ein mit einem Identifizierungscode beschriebener elektronischer Datenträger (102) an einer relativ zu der Bearbeitungskontur (100) vorgegebenen oder vorgebbaren Position innerhalb der Bearbeitungskontur (100) auf das Material (20) aufgebracht wird,
- der Identifizierungscode von dem Datenträger (102) vor Schritt 2d) ausgelesen wird,
- der ausgelesene Identifizierungscode mit den durchgeführten Bearbeitungsprozess charakterisierenden Daten verknüpft wird, und dass
- die verknüpften Daten so in einer Datenbank (80) hinterlegt werden, dass sie allein mit dem Identifizierungscode auffindbar sind.

3. Verfahren nach Anspruch 1 oder 2, **dadurch gekennzeichnet, dass** das Bearbeiten wenigstens einen Bearbeitungsschritt umfasst, in welchem das Material (20) geschnitten wird.

4. Verfahren nach Anspruch 3, **dadurch gekennzeichnet, dass** das Material (20) mittels eines Laserstrahls geschnitten wird, wobei das Bearbeitungswerkzeug (31) eine Fokussieroptik für den Laserstrahl umfasst.

5. Verfahren nach Anspruch 4, **dadurch gekennzeichnet, dass** die den Bearbeitungsprozess charakterisierenden Daten Betriebsdaten einer Laserquelle (40) umfassen.

6. Verfahren nach einem der vorangehenden Ansprüche, **dadurch gekennzeichnet, dass** die den Bearbeitungsprozess charakterisierenden Daten Identifikationsdaten für ein Werk, eine Maschine (1), und/oder einen Maschinenbediener umfassen.

7. Verfahren nach einem der vorangehenden Ansprüche, **dadurch gekennzeichnet, dass** die den Bearbeitungsprozess charakterisierenden Daten einen Speicherort identifizieren, an welchem weitere den Bearbeitungsprozess charakterisierende Daten abgelegt sind.

8. Verfahren nach einem der vorangehenden Ansprüche, **dadurch gekennzeichnet, dass** der Datenträger (102) ein berührungslos beschreibbarer und/oder auslesbarer Datenträger ist.

9. Maschine zum Bearbeiten von bahn- oder plattenförmigem Material (20), mit
- einem Bearbeitungsbereich (11), in welchem das zu bearbeitende Material (20) platziert werden kann,
- einer Steuerung (50) zum Festlegen einer Bearbeitungskontur (100), und
- einem im Bearbeitungsbereich (11) verfahrbaren Bearbeitungswerkzeug (31),
wobei die Maschine weiterhin
- eine im Bearbeitungsbereich (11) verfahrbare erste Einheit (60) zum Aufbringen von elektronischen Datenträgern (102) auf das Material, sowie
- eine zweite Einheit (61) zum Beschreiben und/oder Auslesen von auf das Material (20) aufgebrachten elektronischen Datenträgern (102) umfasst.

10. Maschine nach Anspruch 9, **dadurch gekennzeichnet, dass** die zweite Einheit (61) ebenfalls im Bearbeitungsbereich (11) verfahrbar ausgeführt ist.

11. Maschine nach Anspruch 9 oder 10, **dadurch gekennzeichnet, dass** das Bearbeitungswerkzeug (31), die erste Einheit (60), und/oder die zweite Einheit (61) auf einem in eine erste Richtung verfahrbaren Schlitten (30) so angeordnet sind, dass sie entlang des Schlittens (30) in einer zweiten Richtung verfahrbar sind.

12. Maschine nach Anspruch 11, **dadurch gekennzeichnet, dass** das Bearbeitungswerkzeug (31), die erste Einheit (60) und die zweite Einheit (61) auf einem gemeinsamen Schlitten (30) angeordnet sind.

13. Maschine nach Anspruch 12, **dadurch gekennzeichnet, dass** das Bearbeitungswerkzeug (31) unabhängig von der ersten Einheit (60) und der zweiten Einheit (61) entlang des Schlittens (30) verfahrbar ist.

14. Maschine nach einem der Ansprüche 11 bis 13, **dadurch gekennzeichnet, dass** die erste Einheit (60) und die zweite Einheit (61) bezüglich der Bewegung entlang des Schlittens (30) miteinander gekoppelt sind.

15. Maschine nach einem der Ansprüche 9 bis 14, **dadurch gekennzeichnet, dass** das Bearbeitungswerkzeug (31) eine Fokussiereinheit für einen Laserstrahl umfasst.

## Claims

1. Method for processing web- or sheet-type material (20) in a processing machine (1), comprising the following steps:
1a) Positioning the material (20) in a processing region (11) of the processing machine (1),
1b) Defining a processing contour (100), along which the material (20) is to be processed,
1c) Guiding a processing tool (31) along the processing contour (100) in order to process the material (20), and
1d) Removing the processed material (20) from the processing region (11) of the processing machine (1),
**characterized in that**
- after step 1b) and before step 1d) a writeable electronic data carrier (102) is applied to the material (20) within the processing contour (100) at a position which is predefined or predefinable relative to the processing contour (100), and **in that**
- data characterizing the processing process carried out are written to the writeable data carrier (102) before step d).

2. Method for processing web- or sheet-type material (20) in a processing machine (1), comprising the following steps:
2a) Positioning the material (20) in a processing region (11) of the processing machine (1),
2b) Defining a processing contour (100), along which the material (20) is to be processed,
2c) Guiding a processing tool (31) along the processing contour (100) in order to process the material (20), and
2d) Removing the processed material (20) from the processing region (11) of the processing machine (1),
**characterized in that**
- after step 2b) and before step 2d) an electronic data carrier (102) to which an identification code has been written is applied to the material (20) within the processing contour (100) at a position which is predefined or predefinable relative to the processing contour (100),
- the identification code is read out from the data carrier (102) before step 2d),
- the identification code read out is linked with data characterizing the processing process carried out, and **in that**
- the linked data are stored in a database (80) such that they are able to be found solely with the identification code.

3. Method according to Claim 1 or 2, **characterized in that** the processing comprises at least one processing step in which the material (20) is cut.

4. Method according to Claim 3, **characterized in that** the material (20) is cut by means of a laser beam, wherein the processing tool (31) comprises a focusing optical unit for the laser beam.

5. Method according to Claim 4, **characterized in that** the data characterizing the processing process comprise operating data of a laser source (40).

6. Method according to any of the preceding claims, **characterized in that** the data characterizing the processing process comprise identification data for a factory, a machine (1) and/or a machine operator.

7. Method according to any of the preceding claims, **characterized in that** the data characterizing the processing process identify a storage location at which further data characterizing the processing process are stored.

8. Method according to any of the preceding claims, **characterized in that** the data carrier (102) is a contactlessly writeable and/or readable data carrier.

9. Machine for processing web- or sheet-type material (20), comprising
- a processing region (11), in which the material (20) to be processed can be positioned,
- a controller (50) for defining a processing contour (100), and
- a processing tool (31) movable in the processing region (11),
wherein the machine furthermore comprises
- a first unit (60) movable in the processing region (11) for applying electronic data carriers (102) to the material, and
- a second unit (61) for writing to and/or reading from electronic data carriers (102) applied to the material (20).

10. Machine according to Claim 9, **characterized in that** the second unit (61) is likewise embodied as movable in the processing region (11).

11. Machine according to Claim 9 or 10, **characterized in that** the processing tool (31), the first unit (60) and/or the second unit (61) are/is arranged on a slide (30), which is movable in a first direction, such that they are movable along the side (30) in a second direction.

12. Machine according to Claim 11, **characterized in that** the processing tool (31), the first unit (60) and the second unit (61) are arranged on a common slide (30).

13. Machine according to Claim 12, **characterized in that** the processing tool (31) is movable along the slide (30) independently of the first unit (60) and the second unit (61).

14. Machine according to any of Claims 11 to 13, **characterized in that** the first unit (60) and the second unit (61) are coupled to one another with regard to the movement along the slide (30).

15. Machine according to any of Claims 9 to 14, **characterized in that** the processing tool (31) comprises a focusing unit for a laser beam.

## Revendications

1. Procédé d'usinage d'un matériau en forme de bande ou de panneaux (20) dans une machine d'usinage (1), comprenant les étapes suivantes :
la) mise en place du matériau (20) dans une zone d'usinage (11) de la machine d'usinage (1),
1b) fixation d'un contour d'usinage (100) le long duquel le matériau (20) est à usiner,
1c) guidage d'un outil d'usinage (31) le long du contour d'usinage (100) afin d'usiner le matériau (20), et
1d) retrait du matériau (20) usiné hors de la zone d'usinage (11) de la machine d'usinage (1),
**caractérisé en ce que**
- après l'étape 1b) et avant l'étape 1d), un support de données électronique (102) inscriptible est appliqué à l'intérieur du contour d'usinage (100) sur le matériau (20) à une position prédéfinie ou prédéfinissable par rapport au contour d'usinage (100), et **en ce que**
- des données qui caractérisent le processus d'usinage réalisé sont écrites sur le support de données (102) inscriptible avant l'étape d).

2. Procédé d'usinage d'un matériau en forme de bande ou de panneaux (20) dans une machine d'usinage (1), comprenant les étapes suivantes :
2a) mise en place du matériau (20) dans une zone d'usinage (11) de la machine d'usinage (1),
2b) fixation d'un contour d'usinage (100) le long duquel le matériau (20) est à usiner,
2c) guidage d'un outil d'usinage (31) le long du contour d'usinage (100) afin d'usiner le matériau (20), et
2d) retrait du matériau (20) usiné hors de la zone d'usinage (11) de la machine d'usinage (1),
**caractérisé en ce que**
- après l'étape 2b) et avant l'étape 2d), un support de données électronique (102) sur lequel est écrit un code d'identification est appliqué à l'intérieur du contour d'usinage (100) sur le matériau (20) à une position prédéfinie ou prédéfinissable par rapport au contour d'usinage (100),
- le code d'identification est lu depuis le support de données (102) avant l'étape 2d),
- le code d'identification lu est combiné aux données qui caractérisent le processus d'usinage réalisé, et **en ce que**
- les données combinées sont stockées dans une base de données (80) de telle sorte qu'elles peuvent être retrouvées uniquement par le code d'identification.

3. Procédé selon la revendication 1 ou 2, **caractérisé en ce que** l'usinage comporte au moins une étape d'usinage dans laquelle le matériau (20) est découpé.

4. Procédé selon la revendication 3, **caractérisé en ce que** le matériau (20) est découpé au moyen d'un rayon laser, l'outil d'usinage (31) comportant une optique de focalisation pour le rayon laser.

5. Procédé selon la revendication 4, **caractérisé en ce que** les données qui caractérisent le processus d'usinage comprennent des données de fonctionnement d'une source de laser (40).

6. Procédé selon l'une des revendications précédentes, **caractérisé en ce que** les données qui caractérisent le processus d'usinage comprennent des données d'identification pour un atelier, une machine (1) et/ou un opérateur de machine.

7. Procédé selon l'une des revendications précédentes, **caractérisé en ce que** les données qui caractérisent le processus d'usinage identifient un emplacement de mémorisation au niveau duquel sont stockées des données supplémentaires qui caractérisent le processus d'usinage.

8. Procédé selon l'une des revendications précédentes, **caractérisé en ce que** le support de données (102) est un support de données inscriptible et/ou lisible sans contact.

9. Machine d'usinage d'un matériau en forme de bande ou de panneaux (20), comprenant
- une zone d'usinage (11), dans laquelle peut être mis en place le matériau (20) à usiner,
- une commande (50) destinée à fixer un contour d'usinage (100), et
- un outil d'usinage (31) qui peut être déplacé dans la zone d'usinage (11),
la machine comportant en outre
- une première unité (60) qui peut être déplacée dans la zone d'usinage (11) pour appliquer des supports de données électroniques (102) sur le matériau, ainsi que
- une deuxième unité (61) destinée à écrire sur et/ou à lire depuis les supports de données électroniques (102) appliqués sur le matériau (20).

10. Machine selon la revendication 9, **caractérisée en ce que** la deuxième unité (61) est également configurée pour pouvoir être déplacée dans la zone d'usinage (11).

11. Machine selon la revendication 9 ou 10, **caractérisée en ce que** l'outil d'usinage (31), la première unité (60) et/ou la deuxième unité (61) sont disposés sur un chariot (30) qui peut être déplacé dans une première direction de telle sorte qu'ils peuvent être déplacés le long du chariot (30) dans une deuxième direction.

12. Machine selon la revendication 11, **caractérisée en ce que** l'outil d'usinage (31), la première unité (60) et/ou la deuxième unité (61) sont disposés sur un chariot (30) commun.

13. Machine selon la revendication 12, **caractérisée en ce que** l'outil d'usinage (31) peut être déplacé le long du chariot (30) indépendamment de la première unité (60) et de la deuxième unité (61).

14. Machine selon l'une des revendications 11 à 13, **caractérisée en ce que** la première unité (60) et la deuxième unité (61) sont couplées l'une à l'autre pour ce qui concerne le mouvement le long du chariot (30).

15. Machine selon l'une des revendications 9 à 14, **caractérisée en ce que** l'outil d'usinage (31) comporte une unité de focalisation pour un rayon laser.
